# EUROPEAN PATENT SPECIFICATION

(11) **EP 4 134 301 B1**
(45) Date of publication and mention of the grant of the patent: **18.02.2026**
(21) Application number: 21190958.5
(22) Date of filing: 12.08.2021
(51) Int. Cl.: B64C 29/00, B64D 27/24, B64C 3/38, B64D 29/02

(54) **VERTICAL TAKEOFF AND LANDING AIRCRAFT**
VERTIKAL STARTENDES UND LANDENDES FLUGZEUG
AÉRONEF À DÉCOLLAGE ET À ATTERRISSAGE VERTICAUX

(43) Date of publication of application: 15.02.2023
(73) Proprietor: Zuri.com SE, 140 00 Praha 4 - Krc (CZ)
(72) Inventor: Illich, Michal, 14700 Praha 4 (CZ); Kapoun, Tomas, 75201 Kojetin (CZ)
(74) Representative: Hartvichova, Katerina

(56) References cited:
- ES-A1- 2 775 773
- KR-B1- 102 218 586
- US-A1- 2012 261 523
- US-A1- 2016 031 555
- US-A1- 2016 288 903
- US-A1- 2020 023 963
- US-A1- 2021 122 466

## Description

### Technical field

The present invention relates to a vertical takeoff and landing aircraft driven by electrical motors.

### Background Art

Vertical takeoff and landing aircrafts (VTOLs) are aircrafts which can hover, take off and land vertically. First VTOLs (primitive helicopters) flew in the beginning of the 20th century, and many constructions of VTOLs have been proposed since.

Non-helicopter VTOLs typically have a fuselage, at least one wing, and use propulsion units, such as propellers, tilting propellers or jet lifts, for powering the flight. The propellers or tilting propellers may have the form of open propellers or ducted fans. Some VTOLs known in the art are equipped with tilting wings. Several known construction concepts of VTOLs are briefly summarized herein below.

The lift-and-cruise concept uses two types of propulsion units, in particular, two different types of location and routing of propulsion units. The first type of propulsion units allows vertical movement (takeoff and landing, lift). The second type of propulsion units is a set of propellers which may be driven by electric motors and which allow forward movement when the aircraft, with the help of lift-dedicated propulsion units, rises to the desired flight level. These two types of propulsion units are independent of each other and are not mechanically connected in any way. A typical example of a lift-and-cruise concept is an aircraft technology called Cora, developed by Kitty Hawk Corporation, Mountain View, CA (US), described for example in US D843,306, US 10,364,036 B2 and US 10,364,024 B2.

Another known construction concept is a tandem tilt-wing concept which uses tilting of a main wing in the front and a smaller wing in the rear of the aircraft. The tiltable wings rotate in a limited range of approximately 0° to 90°, i.e. from a horizontal position to a vertical position. The propulsion units are firmly connected to respective wing. The tilting of the propulsion units is thus dependent on the tilting of the entire surface of the wing. Examples of the tandem tilt-wing concept are disclosed, e.g., in US 10,562,620 B2. In this concept, a failure of the tilting mechanism of the main wing is extremely dangerous as the main wing cannot generate any lift if it cannot be tilted to a horizontal position, and it is impossible to land if the main wing cannot be tilted to a fully vertical position. This is a very high risk to bear. Furthermore, the tilting of the main wing represents a huge mechanical strain on the main wing and its tilting mechanism.

One of the previously published tandem tilt-wing solutions is Airbus Vahana. Vahana was a self-piloted eVTOL demonstrator built as a cost-comparable replacement for short-range urban transportation (*https:*//*www.airbus.com*/*innovation*/*zero-emission*_{/}*urban-air-mobility*/*vahana.html, https:*//*en.wikipedia.org*/*wiki*/*Airbus_A%C2%B3_Vahana*)

Yet another known construction concept is a set of two or more tilt-rotors attached to one or more fixed wings ("tilt-rotors-only" construction). The rotors are tilted, including their drive units, which are small and light electric motors. An example of such concept is an aircraft by Joby Aero, Inc., disclosed e.g. in US 10,974,827 B2 or US 10,899,439 B2, or aircrafts dislosed in US 2012/0261523.

US20160031555 and KR102218586 show tilting of the main wing or of a part of the main wing. Such constructions have the disadvantage that in the tilted-main-wing position, the propellers partially propel air into the tilted wing which leads to decreasing their efficiency, and in that the tilting of the main wing does not provide a smooth transition and requires a significant amount of energy. Furthermore, tilted main wing with large surface area behaves like a sail - a horizontally directed airflow can destabilize the aircraft. Yet furthermore, the main wing carries a major part of the weight of the aircraft and thus there are huge forces acting on the hinges on which the main wing is positioned, resulting in a rather significant potential for failure of the hinges and thus decrease of the aircraft reliability.

However, the transition between vertical take-off or landing and horizontal flight mode remains a problem for all VTOL technologies, including the construction concepts described herein above. This transition is energy-intensive, and needs to be delivered through the commands of an automatic control system or according to the commands of a fly-by-wire system controlled by a pilot, or according to the commands from a ground control station in case of remote control.

The transition between vertical take-off or landing mode and flight in horizontal mode is also demanding on the hardware and software of the control system. It is rather demanding in terms of pilot capabilities, because it involves a phase of gradual loss of thrust which may result in one-time or repeated dangerous tilting of the aircraft in any direction or a sudden loss of altitude.

For VTOL aircraft of any design, it is necessary to organically connect both flight modes, i.e. vertical and horizontal, so that in particular, there are no dangerous movements of the aircraft during this transition.

### Disclosure of the Invention

The present invention aims to overcome the drawbacks of the prior art and to ensure organic smooth transition from the vertical flight mode to the cruise flight mode. **In** preferred embodiments, the present invention uses electric motors and aims to achieve an effective power consumption and storage.

The present invention provides a vertical takeoff and landing aircraft having a fuselage ending with a tail, a first wing fixedly attached to the fuselage, a second wing tiltably attached to the fuselage and located between the first wing and the tail, wherein the first wing is provided with at least two tilting propulsion units and the second wing is provided with at least two propulsion units fixedly attached to the second wing, wherein the second wing has a smaller surface area than the first wing.

The term "propulsion unit" refers to propellers, preferably open propellers. The propulsion unit may be tiltably attached to the wing (i.e., tiltable between positions with a horizontal axis of propeller rotation and with a vertical axis of propeller rotation) or fixedly attached to the wing (i.e., non-tiltable).

The propulsion units may include two-, three-, or multi-bladed propellers. Propellers are devices for converting the torque produced by a motor into a force needed to propel the aircraft. The propeller blades may be adjustable, which means that their pitch may be adjusted according to changes in rotational and flight speeds so that the propulsion efficiency is optimal under given conditions.

In some embodiments, the propeller blades on the first wing are longer than the propeller blades on the second wing. Preferably, the propeller blades on the first wing are at least 10 % longer than the propeller blades on the second wing.

Reducing the required power in the critical phase of the transition from vertical to horizontal flight mode and a larger area generating lift means fuel savings, which positively affects the ecology, operating costs, and range.

The propulsion units are preferably attached to the wing via pylons. i.e., the propulsion unit is provided on a pylon which is attached to the wing.

The number of propulsion units per wing is at least two, wherein at least one propulsion unit is located on each side from the fuselage. Preferably, the number of propulsion units per wing is an even number higher than two. For example, the number of propulsion units per wing can be four, or six, or eight. An equal number of propulsion units is located on each side from the fuselage. E.g., four propulsion units are arranged so that there are two propulsion units on one side from the fuselage (i.e., on the wing between the fuselage and one tip of the wing), and two propulsion units on the other side from the fuselage (i.e., on the wing between the fuselage and the other tip of the wing).

The number of propulsion units on the first wing may be the same or higher than the number of propulsion units on the second wing.

In a preferred embodiment, each wing carries at least four propulsion units.

In another preferred embodiment, the first wing carries at least four propulsion units, and the second wing carries at least two propulsion units. More preferably, the first wing carries four propulsion units, and the second wing carries two propulsion units.

The term "fuselage" refers to the main body of the aircraft. The fuselage usually holds the pilot and passengers or cargo.

In this invention the fuselage is preferably positioned under the first wing, i.e., the first wing is attached to the upper portion (top) of the fuselage. However, the fuselage may also be positioned above the wing, i.e., the wing may be attached to the lower portion (bottom) of the fuselage.

Any shape, material and construction of the fuselage known for VTOL aircrafts can be used in the present invention. Particularly advantageous material for the fuselage is carbon fibre composite which is lightweight and has excellent stress characteristics. A particularly advantageous type of the fuselage is monocoque.

When this text refers to a "longitudinal axis" of the fuselage, the axis of the fuselage which extends along the largest dimension is meant. This is the axis which typically extends from nose to the tail of the aircraft.

The first wing is typically located symmetrically about the longitudinal axis of the fuselage.

The second wing is typically divided into two halves which are located symmetrically, each half on one side of the fuselage.

The term "wing" refers to a fin-like structure producing lift. In this text, the structure extending from a first wingtip to a second wingtip is considered to be one wing. In other words, a wing extends to both sides of the fuselage. A wing has a leading edge and a trailing edge.

When this text refers to a "longitudinal axis" of the wing, the axis of the wing which extends along the largest dimension is meant. This is the axis which typically extends from a first wingtip to a second wingtip.

A "pylon" is a longitudinal body attached to the wing (typically to the underside of the wing, but may also be placed in the plane of the wing or above the wing), which may carry components of the aircraft. In this invention, a pylon usually carries a propulsion unit.

The pylons are oriented substantially in parallel with horizontal flight direction. This corresponds to the orientation of the pylons substantially perpendicularly to the longitudinal axis of the wing and to the orientation of the pylons substantially in parallel with a plane which contains the longitudinal axis of the fuselage and is perpendicular to the longitudinal axis of the wing.

Typically, each pylon carries one propulsion unit mounted on the tip of the pylon forwards of the leading edge of the wing.

The pylons may be arranged under the wing, and/or in the plane of the wing, and/or on the wingtip.

Preferably, the pylons extend only aft (forwards) of the wing to which they are attached.

The term "non-tiltable" means that the propulsion unit (in particular, propeller) is mounted fixedly in a specific position and cannot be tilted from this position into any other position.

The term "tilting" or "tiltable" refers to movability of the propulsion unit (in particular, propeller) from a cruise flight powering position to a vertical flight powering position and vice versa.

The terms "forwards", "aft", "behind" are used relative to the horizontal flight direction.

In this text, the term "vertical flight" means a flight in a direction which is substantially perpendicular to the ground, i.e., a flight in a vertical direction. Typically, vertical flight is used for take off, hover and landing.

The term "cruise flight" means a flight in other than vertical direction. Typically, a cruise flight is a substantially horizontal flight in a given altitude. A cruise flight may include changes in heading of the flight.

The term "horizontal flight" refers to a flight in a given altitude with changes of heading and speed only.

The term "take-off" refers to a phase of the flight in which the aircraft gets airborne, i.e., from lifing off the ground to safe altitude. The take-off phase of a VTOL typically corresponds to a vertical flight.

The term "landing" refers to a phase of flight in which the aircraft comes to land. The landing phase includes manoeuvering to land and the touch-down instant. The landing phase of a VTOL typically corresponds to a vertical flight.

The term "climb" refers to a phase of flight in which the aircraft is increasing its altitude. This flight phase typically follows the take-off and precedes the horizontal flight, or may be in between two phases of horizontal flight in different altitudes.

The term "descent" refers to a phase of flight in which the aircraft is decreasing its altitude. This flight phase typically follows the horizontal flight and precedes the landing, or may be in between two phases of horizontal flight in different altitudes.

In a preferred embodiment, the propulsion units are driven by electric motors. An "electric motor" means herein a power unit that converts electric potential into kinetic energy of rotational motion. Electric motors may preferably be selected from commutator DC (direct current) motors, universal AC (alternating current) and DC motors, brushless DC motors, AC single-phase motors, AC three-phase induction motors (asynchronous), and synchronous motors.

The electric motors can be embodied as separate units powered and controlled by a central control system, or controlled by separate control units linked to a primary control unit.

In some embodiments, a propulsion unit may include an assembly comprised of two or more electric motors powering one propeller.

Preferably, at least eight electric motors are provided in an aircraft of the invention. This increases reliability of the aircraft in case of failure of a motor.

In some embodiments, the energy for powering the electric motors may be stored in batteries carried by the aircraft. The batteries may be, e.g., lithium-polymer (Li-Pol), lithium-ion (Li-ion), nickel-zinc (Ni-Zn), nickel-iron (Ni-Fe), lithium-sulphur (Li-S), or nickel-metal hydride (NiMH) batteries.

In preferred embodiments, the aircraft carries an electricity generator. The generator may be installed onboard the aircraft. In some embodiments, the generator comprises a gas turbine for converting mechanical and/or thermal energy of flowing gases into mechanical work for rotating a shaft of an alternator. In some embodiments, the generator comprises an engine, preferably an internal combustion engine, for rotating a shaft of an alternator. The alternator produces electric current for powering the electric motors. **In** some embodiments, the electricity generator may be a fuel cell, fuelled by hydrogen or methanol.

**In** some embodiments, the engine may use fuel selected from liquefied hydrogen, compressed natural gas (CNG), hydrocarbon heating mixture (propane-butane, LPG), plant-based biofuel, conventional aviation fuel, aviation kerosene, and aviation gasoline.

Excess electricity produced using an electricity generator but not currently needed for powering electric motors, may be stored in an electricity accumulation device. During critical phases of flight, such as the vertical take-off and landing, a transition from vertical to horizontal flight mode or flight in complex meteorological conditions, the stored electrical energy provides a necessary power reserve for the electric motors.

Excess electricity can be stored preferably in electrochemical batteries suitably located in the interior of the fuselage and wings of the aircraft. The batteries may be selected from lithium-polymer (Li-Pol), lithium-ion (Li-ion), nickel-zinc (Ni-Zn), nickel-iron (Ni-Fe), lithium-sulphur (Li-S), or nickel-metal hydride (NiMH) batteries.

The tilting of the propulsion units attached to the first wing is preferably controlled by servomotors or by hydraulic units. Each servomotor or hydraulic unit controls the tilt angle of one propulsion unit. The servomotors or hydraulic units may be powered by electricity.

The second wing tilts, i.e. changes its position relative to the fuselage, preferably by action of servomotor(s) or hydraulic unit(s). Such servomotor or hydraulic unit moves (tilts) the entire second wing. The inclination angle of the individual elements of the second wing (which is a fixed assembly of components, i.e. electric motors, propulsion units, and wing), is variable with regard to the fuselage. The position of the individual components in relation to each other does not change.

The present invention offers fundamental advantages over the prior art in terms of efficiency and safety of operation mainly during the transition between vertical take-off/landing and flight in horizontal mode. The main benefit of this solution is the stabilization of the aircraft in critical phases of flight, especially during the transition from vertical to horizontal flight mode.

The efficiency of operation is crucial for ecology, operating costs, and especially the range of the aircraft. Therefore, efficiency is an important parameter that affects the ability of particular aviation technology to succeed commercially in the market.

A direct comparison of the VTOL aircraft construction according to the present invention with the prior art constructions used in VTOL aircraft passenger and cargo transport or as concepts is presented herein below. All the comparisons assume that the drive units are electric motors.

Compared to the lift-and-cruise construction, the combination of tilt-rotors in the first (main) wing and tilt-wing-type second wing according to the invention provides for a better aerodynamics in the cruise flight and for reduction of the aircraft weight. Computer simulations and calculations assessing aircrafts of the same size at the same speed show that the aerodynamics in the cruise flight, expressed as cD0 (drag coeficient at the zero lift) is 30 % lower for the aircraft of the present invention, compared to the lift-and-cruise concept.

To be specific, a four-seater VTOL airplane, with approximately 2 tonnes and wingspan of 12-13 meters with a cruise speed of 70 m/s was analyzed. For this configuration the lift-and-cruise construction with 4 pylons bearing 8 propulsion units for vertical take-off and 1 propulsion unit for horizontal flight was considered. The construction of the present invention with 4 tilt-rotors on the first wing and 4 propulsion units on a tilting second wing was considered for the comparison.

This considered lift-and-cruise construction had cD0 of 0,05, resulting in lift/drag ratio up to 9,5. The considered construction according to the present invention had cD0 of 0,035, resulting in a lift/drag ratio up to 13,3. This difference was partially caused by the smaller pylons (tilt-rotors require a smaller pylon extending aft of the wing compared to a massive pylon extending aft of the wing as well as behind the wing for the lift-and-cruise configuration). A significant improvement was caused by the propellers configuration according to the invention. While the lift-and-cruise has the lift propellers unused in the horizontal flight and causing unnecessary drag, the construction according to the invention uses all propellers in all flight modes. A minor aerodynamic improvement came from the streamlined tail (due to the tilting second wing in the case of the construction according to the present invention).

Furthermore, the calculations showed 8.7% reduction in the weight, due to the aircraft of the present invention using fewer electromotors, having smaller pylons to hold the propulsion system and generally using every component in each phase of the flight - compared to the lift-and-cruise construction which uses part of the components solely for vertical flight and another part of components solely for horizontal/cruise flight. Specifically, for the considered four-seater aircraft, the main weight savings come from removing the propulsion unit dedicated for horizontal flight (consisting of a powerful 72 kg electromotor, 28 kg ESC and 30 kg propeller). With other changes, such as replacing long pylons with smaller ones, adding tilting mechanisms, changes in the wing structure and reduced fuel tank enabled by the aerodynamic improvements, the overall weight change was from approximately 2300 kg for the lift-and-cruise construction to 2100 kg for the construction according to the invention.

Compared to the tandem tilt-wing construction, the aircraft construction according to the present invention is less technically demanding, more reliable, and simultaneously more cost-effective.

The tilting of the entire main wing (referred to as "first wing" in the present disclosure) is problematic, especially concerning the enormous forces that strain the rotating mechanisms of the main wing, which essentially carry the entire weight of the aircraft. In case of failure of the tilting mechanism of the main wing and thus the impossibility to set the main wing to a horizontal position, it is challenging to fly as the main wing cannot generate any lift. In case of failure of the tilting mechanism of the main wing and the impossibility of setting the main wing to a fully vertical position, it is not possible to land. Practical problems with tilting the main wing are demonstrated by the abandonment of such projects. So far, no tandem tilt-wing construction was introduced into practical use.

Compared to "tilt-rotors-only"-type construction, the aircraft construction according to the present invention reduces the weight of the rear of the aircraft due to having only one tilting mechanism tilting the wing, as compared to the two or more tilting mechanisms - one for each rotor - in the "tilt-rotors-only" construction.

Compared to VTOL aircraft constructions known in the prior art, the construction of the present invention provides for a smoother and more reliable change of flight mode (vertical to cruise and cruise to vertical), which results in lower energy consumption and better comfort for the pilot and passengers.

### Brief Description of Drawings

Fig. 1 shows an aircraft according to an example of the invention, in an axonometric view, with the tiltable propulsion units and the second wing tilted into a vertical flight position.
Fig. 2 shows the aircraft of Fig. 1 in a top view, with the tiltable propulsion units and the second wing tilted into a cruise flight position.

### Example

The invention is further illustrated by way of an example which should not be construed as limiting the scope of the protection, and with reference to the attached drawings.

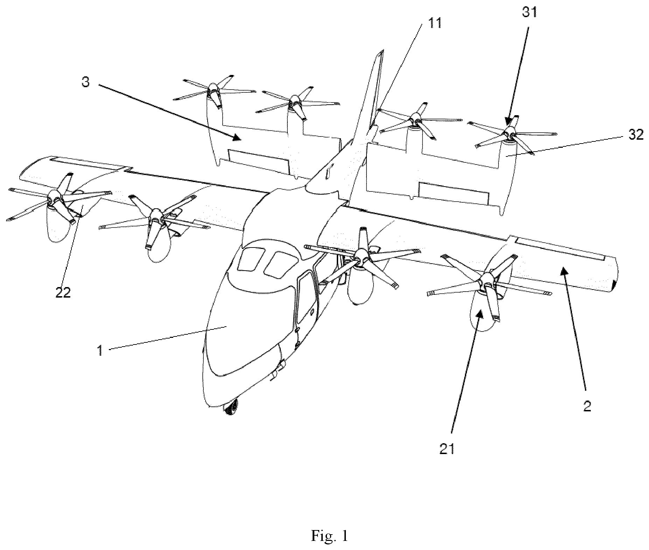

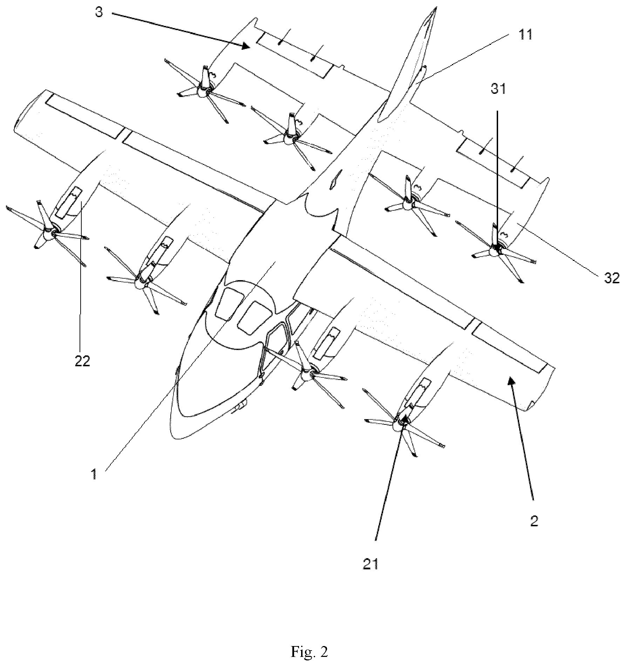

Fig. 1 and Fig. 2 show a vertical takeoff and landing (VTOL) aircraft having a fuselage 1 ending with a tail 11, a first wing 2 fixedly attached to the fuselage 1, a second wing 3 tiltably attached to the fuselage 1 and located between the first wing 2 and the tail 11, wherein the first wing 2 is provided with four tilting propulsion units 21 and the second wing 3 is provided with four propulsion units 31 fixedly attached to the second wing 3. The second wing 3 has a smaller surface area than the first wing 2. The propulsion units 21, 31 are open propellers.

The propulsion units 21, 31 are attached to the wing via pylons 22, 32, respectively. The pylons 22, 32 as shown in Figs. 1 and 2 are located in the plane of the wing and extend aft of the wing to which they are attached.

The propulsion units are driven by electric motors. Any of commutator DC (direct current) motors, universal AC (alternating current) and DC motors, brushless DC motors, AC single-phase motors, AC three-phase induction motors (asynchronous), and synchronous motors can be used in this embodiment. Fig. 1 shows the VTOL aircraft in a position for vertical flight. The propulsion units 21 are tilted into a position for vertical flight, and the wing 3 is also tilted into a position for vertical flight. Fig. 2 shows the VTOL aircraft in a position for horizontal flight. The propulsion units 21 are tilted into a position for horizontal (cruise) flight, and the wing 3 is also tilted into a position for horizontal (cruise) flight.

## Claims

1. A vertical takeoff and landing aircraft having a fuselage (1) ending with a tail (11) and a first wing (2) fixedly attached to the fuselage (1), wherein the first wing (2) is provided with at least two tilting propulsion units (21), the aircraft is further provided with a second wing (3) tiltably attached to the fuselage (1) and located between the first wing (2) and the tail (11), wherein the second wing (3) is provided with at least two propulsion units (31) fixedly attached to the second wing (3), **characterized in that** the second wing (3) has a smaller surface area than the first wing (2).

2. The vertical takeoff and landing aircraft according to claim 1, wherein the propulsion units (21, 31) are open propellers.

3. The vertical takeoff and landing aircraft according to any one of claims 1 or 2, wherein the propulsion units (21, 31) are attached to the wing (2, 3) via pylons (22, 32), wherein each pylon (22, 32) carries one propulsion unit (21, 31) mounted on the tip of the pylon (22, 32) forwards of the leading edge of the wing.

4. The vertical takeoff and landing aircraft according to claim 3, wherein the pylons (22, 32) extend only aft of the wing (2, 3) to which they are attached.

5. The vertical takeoff and landing aircraft according to any one of claims 1 to 4, wherein the number of propulsion units (21) on the first wing (2) is the same or higher than the number of propulsion units (31) on the second wing (3).

6. The vertical takeoff and landing aircraft according to any one of claims 1 to 5, wherein the first wing (2) carries at least four propulsion units (21), and the second wing (3) carries at least two propulsion units (31).

7. The vertical takeoff and landing aircraft according to any one of claims 1 to 5, wherein each wing (2, 3) carries at least four propulsion units (21, 31).

8. The vertical takeoff and landing aircraft according to any one of claims 1 to 7 wherein the propulsion units (21, 31) are driven by electric motors.

9. The vertical takeoff and landing aircraft according to claim 8, wherein the electric motors are embodied as separate units powered and controlled by a central control system, or as separate units controlled by separate control units linked to a primary control unit.

10. The vertical takeoff and landing aircraft according to claim 8 or 9, wherein the propulsion units (21, 31) include an assembly comprising two or more electric motors powering one propeller.

11. The vertical takeoff and landing aircraft according to any one of claims 8 to 10, wherein the aircraft carries an electricity generator installed onboard the aircraft.

12. The vertical takeoff and landing aircraft according to claim 11, wherein
- the electricity generator comprises a gas turbine for converting mechanical and/or thermal energy of flowing gases into mechanical work for rotating a shaft of an alternator, or
- the electricity generator comprises an engine, preferably an internal combustion engine, for rotating a shaft of an alternator, or
- the electricity generator is a fuel cell, fuelled by hydrogen or methanol.

13. The vertical takeoff and landing aircraft according to any one of claims 1 to 12, wherein the tilting of the propulsion units (21) attached to the first wing (2) and/or the tilting of the second wing (3) is controlled by servomotors and/or by hydraulic units.

14. The vertical takeoff and landing aircraft according to any one of claims 1 to 13, wherein propeller blades on the first wing (2) are longer than propeller blades on the second wing (3).

## Patentansprüche

1. Ein Senkrechtstart- und Landeflugzeug mit einem Rumpf (1), der in einem Leitwerk (11) endet, und einem ersten, fest mit dem Rumpf (1) verbundenen Flügel (2), wobei der erste Flügel (2) mit mindestens zwei schwenkbaren Antriebseinheiten (21) versehen ist, worin das Flugzeug ist ferner mit einem zweiten, schwenkbar am Rumpf (1) befestigten Flügel (3) ausgestattet, der sich zwischen dem ersten Flügel (2) und dem Leitwerk (11) befindet und mit mindestens zwei fest verbundenen Antriebseinheiten (31) versehen ist, **dadurch gekennzeichnet, dass** der zweite Flügel (3) eine kleinere Oberfläche als der erste Flügel (2) aufweist.

2. Das Senkrechtstart- und Landeflugzeug nach Anspruch 1, wobei die Antriebseinheiten (21, 31) offene Propeller sind.

3. Das Senkrechtstart- und -landeflugzeug nach einem der Ansprüche 1 oder 2, wobei die Antriebseinheiten (21, 31) über Pylone (22, 32) am Flügel (2, 3) befestigt sind und jeder Pylon (22, 32) eine Antriebseinheit (21, 31) trägt, die an der Spitze des Pylons (22, 32) vor der Vorderkante des Flügels angebracht ist.

4. Das Senkrechtstart- und -landeflugzeug nach Anspruch 3, wobei sich die Pylone (22, 32) nur vor dem Flügel (2, 3) erstrecken, an dem sie befestigt sind.

5. Das Senkrechtstart- und -landeflugzeug nach einem der Ansprüche 1 bis 4, wobei die Anzahl der Antriebseinheiten (21) am ersten Flügel (2) gleich oder größer ist als die Anzahl der Antriebseinheiten (31) am zweiten Flügel (3).

6. Senkrechtstart- und -landeflugzeug nach einem der Ansprüche 1 bis 5, wobei der erste Flügel (2) mindestens vier Antriebseinheiten (21) und der zweite Flügel (3) mindestens zwei Antriebseinheiten (31) trägt.

7. Senkrechtstart- und -landeflugzeug nach einem der Ansprüche 1 bis 5, wobei jeder Flügel (2, 3) mindestens vier Antriebseinheiten (21, 31) trägt.

8. Senkrechtstart- und -landeflugzeug nach einem der Ansprüche 1 bis 7, wobei die Antriebseinheiten (21, 31) von Elektromotoren angetrieben werden.

9. Senkrechtstart- und -landeflugzeug nach Anspruch 8, wobei die Elektromotoren als separate Einheiten ausgeführt sind, die von einem zentralen Steuerungssystem angetrieben und gesteuert werden, oder als separate Einheiten, die von separaten, mit einer primären Steuereinheit verbundenen Steuereinheiten gesteuert werden.

10. Das Senkrechtstart- und -landeflugzeug nach Anspruch 8 oder 9, wobei die Antriebseinheiten (21, 31) eine Baugruppe mit zwei oder mehr Elektromotoren umfassen, die einen Propeller antreiben.

11. Das Senkrechtstart- und -landeflugzeug nach einem der Ansprüche 8 bis 10, wobei das Flugzeug einen an Bord installierten Stromgenerator mitführt.

12. Das Senkrechtstart- und -landeflugzeug nach Anspruch 11, wobei
- der Stromgenerator eine Gasturbine zur Umwandlung der mechanischen und/oder thermischen Energie strömender Gase in mechanische Arbeit zur Drehung einer Generatorwelle umfasst, oder
- der Stromgenerator einen Motor, vorzugsweise einen Verbrennungsmotor, zur Drehung einer Generatorwelle umfasst, oder
- der Stromgenerator eine mit Wasserstoff oder Methanol betriebene Brennstoffzelle ist.

13. Das Senkrechtstart- und -landeflugzeug nach einem der Ansprüche 1 bis 12, wobei die Neigung der am ersten Flügel (2) angebrachten Antriebseinheiten (21) und/oder die Neigung des zweiten Flügels (3) durch Servomotoren und/oder Hydraulikeinheiten gesteuert wird.

14. Das Senkrechtstart- und -landeflugzeug nach einem der Ansprüche 1 bis 13, wobei die Propellerblätter am ersten Flügel (2) länger sind als die Propellerblätter am zweiten Flügel (3).

## Revendications

1. Aéronef à décollage et atterrissage vertical comportant un fuselage (1) se terminant par un empennage (11) et une première aile (2) fixée au fuselage (1), cette première aile (2) étant munie d'au moins deux propulseurs orientables (21), où ledit aéronef comporte également une seconde aile (3) fixée de manière orientable au fuselage (1) et située entre la première aile (2) et l'empennage (11), cette seconde aile (3) étant munie d'au moins deux propulseurs (31) fixés à la seconde aile (3), **caractérisé en ce que** la seconde aile présente une surface plus petite que la première aile (2).

2. Aéronef à décollage et atterrissage vertical selon la revendication 1, où les propulseurs (21, 31) sont des hélices ouvertes.

3. L'aéronef à décollage et atterrissage vertical selon l'une quelconque des revendications 1 ou 2, où les unités de propulsion (21, 31) sont fixées à l'aile (2, 3) par des pylônes (22, 32), chaque pylône (22, 32) supportant une unité de propulsion (21, 31) montée à son extrémité, en avant du bord d'attaque de l'aile.

4. L'aéronef à décollage et atterrissage vertical selon la revendication 3, où les pylônes (22, 32) s'étendent uniquement en avant de l'aile (2, 3) à laquelle ils sont fixés.

5. L'aéronef à décollage et atterrissage vertical selon l'une quelconque des revendications 1 à 4, où le nombre d'unités de propulsion (21) sur la première aile (2) est égal ou supérieur au nombre d'unités de propulsion (31) sur la seconde aile (3).

6. Aéronef à décollage et atterrissage vertical selon l'une quelconque des revendications 1 à 5, où la première aile (2) porte au moins quatre unités de propulsion (21) et la seconde aile (3) porte au moins deux unités de propulsion (31).

7. Aéronef à décollage et atterrissage vertical selon l'une quelconque des revendications 1 à 5, où chaque aile (2, 3) porte au moins quatre unités de propulsion (21, 31).

8. Aéronef à décollage et atterrissage vertical selon l'une quelconque des revendications 1 à 7, où les unités de propulsion (21, 31) sont propulsées par des moteurs électriques.

9. Aéronef à décollage et atterrissage vertical selon la revendication 8, où les moteurs électriques sont soit des unités distinctes alimentées et commandées par un système de commande central, soit des unités distinctes commandées par des unités de commande distinctes reliées à une unité de commande principale.

10. Aéronef à décollage et atterrissage vertical selon la revendication 8 ou 9, où les unités de propulsion (21, 31) comprennent un ensemble constitué de deux moteurs électriques ou plus propulsant une hélice.

11. Aéronef à décollage et atterrissage vertical selon l'une quelconque des revendications 8 à 10, où l'aéronef embarque un générateur électrique.

12. Aéronef à décollage et atterrissage vertical selon la revendication **11,** où:
- le générateur électrique comprend une turbine à gaz convertissant l'énergie mécanique et/ou thermique des gaz en mouvement en travail mécanique pour la rotation de l'arbre d'un alternateur ; ou
- le générateur électrique comprend un moteur, de préférence un moteur à combustion interne, pour la rotation de l'arbre d'un alternateur ; ou
- le générateur électrique est une pile à combustible alimentée à l'hydrogène ou au méthanol.

13. L'aéronef à décollage et atterrissage vertical selon l'une quelconque des revendications 1 à 12, où l'inclinaison des unités de propulsion (21) fixées à la première aile (2) et/ou l'inclinaison de la seconde aile (3) est commandée par des servomoteurs et/ou par des unités hydrauliques.

14. L'aéronef à décollage et atterrissage vertical selon l'une quelconque des revendications 1 à 13, où les pales de l'hélice de la première aile (2) sont plus longues que celles de l'hélice de la seconde aile (3).
